# EUROPÄISCHE PATENTSCHRIFT

(11) **EP 3 501 878 B1**
(45) Veröffentlichungstag und Bekanntmachung des Hinweises auf die Patenterteilung: **13.07.2022**
(21) Anmeldenummer: 17210128.9
(22) Anmeldetag: 22.12.2017
(51) Int. Cl.: B60L 13/03, B65G 37/00, B65G 37/02, B65G 54/02, B65B 35/10, B60M 7/00

(54) **TRANSPORTEINRICHTUNG IN FORM EINES LANGSTATORLINEARMOTORS**
TRANSPORT DEVICE IN THE FORM OF A LINEAR MOTOR WITH GUIDEWAY STATOR
DISPOSITIF DE TRANSPORT SOUS FORME D'UN MOTEUR LINÉAIRE À STATOR LONG

(43) Veröffentlichungstag der Anmeldung: 26.06.2019
(73) Patentinhaber: B&R Industrial Automation GmbH, 5142 Eggelsberg (AT)
(72) Erfinder: Brucker, Michael, 4890 Weißenkirchen i.A. (AT); Spanlang, Franz, 4020 Linz (AT)
(74) Vertreter: Patentanwälte Pinter & Weiss OG

(56) Entgegenhaltungen:
- EP-A1- 1 123 884
- DE-A1-102012 205 060
- US-A- 3 631 806
- US-A- 4 800 999
- Beckhoff: "Benefit from intelligent drive technology. XTS. The extended Transport System", , 30. September 2015 (2015-09-30), XP055477367, Beckhoff.com Gefunden im Internet: URL:https://download.beckhoff.com/download /Document/catalog/XTS_Beckhoff_e.pdf [gefunden am 2018-05-22]
- Anonymous: "CDA - Revolutionary linear transport system", , 27. September 2015 (2015-09-27), XP055477867, Gefunden im Internet: URL:http://www.controlsdrivesautomation.co m/page_649072.asp [gefunden am 2018-05-23]

## Beschreibung

Die Erfindung betrifft eine Transporteinrichtung in Form eines Langstatorlinearmotors mit zumindest einer Transporteinheit, an der Antriebsmagnete angeordnet sind, und einer, aus einer Vielzahl von, in Längsrichtung hintereinander angeordneten, Transportsegmenten aufgebauten, Transportstrecke mit einem Anfangspunkt und einem Endpunkt, entlang der die Transporteinheit in Längsrichtung entlang eines, von den Transportsegmenten vorgegebenen, Bewegungspfades bewegbar ist, wobei an den Transportsegmenten jeweils ortsfeste elektrische Antriebsspulen angeordnet sind, die mit den Antriebsmagneten der Transporteinheit zusammenwirken, um einen Langstatorlinearmotor auszubilden und um eine Vortriebskraft zum Bewegen der Transporteinheit entlang des Bewegungspfades zu erzeugen, wobei die Transportstrecke zumindest ein gekrümmtes Transportsegment mit einem, in einer zweidimensionalen Ebene liegenden gekrümmten Bewegungspfad aufweist, wobei die zweidimensionale Ebene eine Bewegungsebene definiert, in der die Transporteinheit entlang der gesamten Transportstrecke bewegbar ist, wobei in Längsrichtung an den Anfangspunkt oder Endpunkt der Transportstrecke anschließend ein Übergangssegment mit einem Stetigförderer mit einer Längsachse zum Transport der Transporteinheit in einer, entlang der Längsachse verlaufenden, Bewegungsrichtung angeordnet ist, wobei der Stetigförderer vorgesehen ist, die Transporteinheit in Bewegungsrichtung zumindest abschnittsweise in einer von der Bewegungsebene der Transportstrecke abweichenden Förderebene zu bewegen.

In so gut wie allen modernen Produktionsanlagen ist es erforderlich, Bauteile oder Komponenten, auch über längere Transportstrecken hinweg, mit Transporteinrichtungen zwischen einzelnen Handhabungs- oder Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, nebeneinander entlang einer Transportstrecke ortsfest angeordnet. Auf einer Transporteinheit ist eine Anzahl von Antriebsmagneten, entweder als Permanentmagnete oder als elektrische Spule oder Kurzschlusswicklung, angeordnet, die mit den Antriebsspulen zusammenwirken. Die (elektro)magnetischen Felder der Antriebsmagnete und der Antriebsspulen wirken zusammen, um eine Vortriebskraft auf die Transporteinheit, die die Transporteinheit vorwärtsbewegt, zu erzeugen. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird die Größe der Vortriebskraft beeinflusst und die Transporteinheit kann in gewünschter Weise entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung.

Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Oftmals ist der Langstator bzw. eine Transportstrecke auch in Form von einzelnen Streckenabschnitten aufgebaut, die wiederum aus zusammengefügten Transportsegmenten bestehen. Durch diese Modularität kann ein Langstatorlinearmotor einfacher aufgebaut werden, insbesondere wenn definierte Streckenabschnitte und Transportsegmente verwendet werden. Die konstruktive Ausgestaltung des Langstatorlinearmotors, also z.B. die Ausführung der Antriebsspulen, der Förderstrecke, der Transporteinheiten, der Führungen der Transporteinheit, usw., kann natürlich verschieden sein, wobei das grundlegende Funktionsprinzip eines Langstatorlinearmotors aber gleich bleibt.

In der Regel werden solche Transporteinrichtungen in Form eines Langstatorlinearmotors meist in einer Ebene angeordnet, sodass die Transporteinheiten entlang einer ebenen Transportstrecke bewegt werden. Die Transportstrecke kann dabei aus Transportsegmenten in Form von Kurvensegmenten, Geraden oder auch Weichen zusammengesetzt sein, die Bewegung erfolgt aber immer in der gleichen Ebene. Für gewisse Anwendungen kann es aber erforderlich sein, dass Transporteinheiten von einer Ebene in eine andere Ebene bewegt werden, beispielsweise um Komponenten von einer niedrigen auf eine höher gelegene Ebene zu befördern.

In der WO 2014/047104 A1 ist z.B. eine Transporteinrichtung in Form eines Langstatorlinearmotors vorgeschlagen, die 180° Bogenelemente oder winkelige Transportsegmente zur Überwindung vertikaler Höhenunterschiede aufweisen kann. Dabei wird eine Transporteinheit im Wesentlichen von einer ersten horizontalen Ebene in eine, höher oder tiefer liegende, zweite horizontale Ebene bewegt, wobei die beiden Ebenen parallel zueinander angeordnet sind. Eine Überführung der Transporteinheit beispielsweise in eine vertikale Ebene ist dabei allerdings nicht möglich.

Die WO 2015/042409 A1 offenbart ebenfalls eine Transporteinrichtung in Form eines Langstatorlinearmotors (LLM), die es ermöglicht, eine Transporteinheit z.B. von einer horizontalen Ebene in eine vertikale Ebene zu bewegen und dabei die Orientierung der Transporteinheit von horizontal zu vertikal zu ändern. Dazu sind verschiedene vertikale und horizontale Transportsegmente vorgesehen. Nachteilig ist allerdings, dass viele verschiedene Transportsegmente erforderlich sind, um von der horizontalen Ebene in die vertikale Ebene zu wechseln und dass die Flexibilität hinsichtlich der Anzahl und Lage der Bewegungsebenen begrenzt ist. Zudem ist der Aufbau der zur Änderung der Bewegungsebene erforderlichen Transportsegmente sehr komplex.

Die EP 3 03 756 B1 offenbart ein Transportsystem in Form eines Langstatorlinearmotors mit ortsfest angeordneten Transportstrecken, auf denen jeweils Transporteinheiten in bekannter Weise nach dem Motorprinzip bewegbar sind. Weiters ist an den Enden der ortsfesten Transportstrecken in Querrichtung eine Fördereinrichtung angeordnet, auf der ein Verbindungsstreckenabschnitt bewegbar ist. Der Verbindungsstreckenabschnitt kann auf der Fördereinrichtung so bewegt werden, dass er mit den ortsfesten Transportstrecken in Übereinstimmung gebracht werden kann. Dadurch kann eine Transporteinheit von einer ortsfesten Transportstrecke auf den Verbindungsstreckenabschnitt bewegt werden, mittels des Verbindungsstreckenabschnitts auf der Fördereinrichtung zu einer anderen ortsfesten Transportstrecke bewegt werden und entlang dieser anderen ortsfesten Transportstrecke weiterbewegt werden. Zusätzlich kann die Fördereinrichtung vertikal bewegt werden, sodass mehrere vertikal übereinander angeordnete ortsfeste Transportstrecken erreicht werden können. Nachteilig ist jedoch neben dem sehr komplexen Aufbau, dass keine kontinuierliche Bewegung einer Transporteinheit zwischen den ortsfesten Transportstrecken möglich ist und dass nur eine Bewegung in übereinanderliegenden parallelen Ebenen möglich ist.

Die EP 1 123 884 A1 offenbart eine Vorrichtung zum Ablenken von Behältern von einer Bewegungsbahn. Die Vorrichtung weist eine Bewegungsbahn mit mehreren Transportabschnitten in Form eines Langstatorlinearmotors auf, entlang denen starre Schieber in Längsrichtung bewegt werden können. Die Ablenkung erfolgt in einer Richtung quer zur Bewegungsrichtung, indem die Schieber entlang eines Ablenkabschnitts bewegt werden, der eine bestimmte Konturaufweist. Am Ende und am Anfang der LLM-Bewegungsbahn sind Räder mit Mitnahmeelementen vorgesehen und unterhalb der Bewegungsbahn ist ein Rückführabschnitt vorgesehen. Mittels der Räder können die Schieber auf den Rückführabschnitt transportiert werden bzw. von diesem zurück zur Bewegungsbahn. Dadurch, dass die Räder direkt an die Bewegungsbahn anschließen, kann keine ruckfreie Bewegung der Schieber erfolgen, was insbesondere für einen Transport sensibler Objekte nachteilig wäre.

Es ist daher die Aufgabe der Erfindung, eine einfache und flexibel einsetzbare Transporteinrichtung in Form eines Langstatorlinearmotors mit einem verbesserten Übergang zwischen einem Transportsegment des Langstatorlinearmotors und einem Stetigförderer anzugeben. Erfindungsgemäß wird die Aufgabe dadurch gelöst, dass zur ruckfreien Bewegung der Transporteinheit im Übergang zwischen der Transportstrecke und dem Übergangssegment, ein stetiger Übergang zwischen der Bewegungsebene der Transportstrecke und der Förderebene des Stetigförderers vorgesehen ist, wobei die Längsachse des Stetigförderers einen kontinuierlichen Krümmungsverlauf aufweist und an beiden Enden jeweils einen Geradenabschnitt aufweist und wobei das an das Übergangssegment anschließende Transportsegment als gerades Transportsegment ausgebildet ist. Damit kann die Transporteinheit in verschiedenen Ebenen bewegt werden, ohne dazu ein komplexes Langstatorlinearmotor-Transportsegment mit Antriebsspulen zu benötigen. Eine Änderung der Ebene, in der die Transporteinheit bewegt wird, kann damit einfach und kostengünstig erfolgen. Durch den stetigen Übergang von der Bewegungsebene auf die Transportebene und den kontinuierlichen Krümmungsverlauf des Stetigförderers kann zudem eine ruckfreie Bewegung der Transporteinheit im Übergang und am Stetigförderer ermöglicht werden.

Vorzugsweise verläuft die Förderebene in Richtung der Längsachse des Stetigförderers zumindest abschnittsweise parallel zur Bewegungsebene. Dadurch kann die Transporteinheit beispielsweise am Stetigförderer abschnittsweise auf einer parallelen und relativ zur Bewegungsebene höher oder tiefer liegenden Ebene bewegt werden.

Wenn die Förderebene in Bewegungsrichtung zumindest abschnittsweise in einem bestimmten Drehwinkel um die Längsachse des Stetigförderers verdreht ist, kann die Ebenenänderung der Transporteinheit im Wesentlichen Schraubenförmig um die Längsachse des Stetigförderers erfolgen.

Die Längsachse des Stetigförderers weist die Eingenschaften in Anspruch 1 angegeben auf.

Dadurch kann der Stetigförderer und damit der Bewegungsverlauf der Transporteinheit einfach ausgestaltet werden, beispielsweise über die gesamte Länge des Stetigförderers oder auch nur abschnittsweise in Form einer schiefen Ebene oder eines Kreisbogens.

ZurRuck-freien Bewegung der Transporteinheit entlang des Stetigförderers weist die Längsachse des Stetigförderers einen kontinuierlichen Krümmungsverlauf auf.

Vorzugsweise ist in Bewegungsrichtung an das Übergangssegment anschließend zumindest ein weiteres Übergangssegment mit einem Stetigförderer vorgesehen. Damit kann die Flexibilität im Aufbau einer Transportstrecke erhöht werden, beispielsweise können standardisierte Übergangssegmente kombiniert werden.

Wenn an das Übergangssegment in Bewegungsrichtung anschließend der Anfangs- oder Endpunkt der Transportstrecke oder ein Anfangs- oder Endpunkt einer weiteren Transportstrecke vorgesehen ist, kann entweder die Transportstrecke mittels des Übergangssegments geschlossen werden oder das Übergangssegment kann dazu genutzt werden, einen Übergang der Transporteinheit von der Transportstrecke auf eine weitere Transportstrecke zu ermöglichen.

Vorteilhafterweise weist der Stetigförderer zumindest eine Halteeinrichtung zum kraftschlüssigen oder formschlüssigen Halten der Transporteinheit am Stetigförderer auf, wobei die Hateeinrichtung vorzugsweise ferromagnetische Eigenschaften aufweist und zum kraftschlüssigen Halten der Transporteinheit mit Antriebsmagneten der Transporteinheit zusammenwirkt oder die Halteeinrichtung zumindest ein Aufnahmeeinheit aufweist, das zum formschlüssigen Halten der Transporteinheit am Stetigförderer mit zumindest einem, an der Transporteinheit angeordneten, korrespondierenden Aufnahmeelement zusammenwirkt. Dadurch kann ein sicheres Halten der Transporteinheit am Stetigförderer während der Bewegung entlang des Stetigförderers gewährleistet werden.

Vorteilhafterweise sind die Antriebsspulen an den Transportsegmenten in Längsrichtung voneinander beabstandete angeordnet und weisen jeweils einer Spulenachse auf, wobei die Spulenachsen aller Antriebsspulen aller Transportsegmente der Transportstrecke in einer gemeinsamen zweidimensionalen Spulenebene liegen, wobei die Spulenebene der Bewegungsebene der Transportstrecke entspricht oder parallel dazu angeordnet ist. Dadurch ist auch bei gekrümmten Transportsegmenten ein relativ einfacher Aufbau möglich und es ist eine Erzeugung eines gleichmäßigen Magnetfelds sowohl in Quer- als auch in Längsrichtung des Transportsegments möglich.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1a und 1b Transporteinrichtungen in Form eines Langstatorlinearmotors,
Fig.1c-1e drei Transportstrecken mit verschiedenen Anordnungen von Antriebsspulen,
Fig.2 eine erfindungsgemäße Transporteinrichtung mit einem Übergangssegment,
Fig.3 eine nicht erfindungsgemäße Transporteinrichtung mit einem Übergangssegment in
einer alternativen Ausgestaltung,
Fig.4 eine nicht erfindungsgemäße Transporteinrichtung mit einem Übergangssegment in
einer weiteren alternativen Ausgestaltung,
Fig.5 einen Ausschnitt eines Übergangssegments mit einer Halteeinrichtung,
Fig.6 eine erfindungsgemäße Transporteinrichtung mit zwei Transportstrecken und zwei Übergangssegmenten,
Fig.7 eine geschlossene nicht erfindungsgemäße Transporteinrichtung mit einem Übergangssegment
Fig.8 eine geschlossene nicht erfindungsgemäße Transporteinrichtung mit einer Transportstrecke und drei Übergangssegmenten.

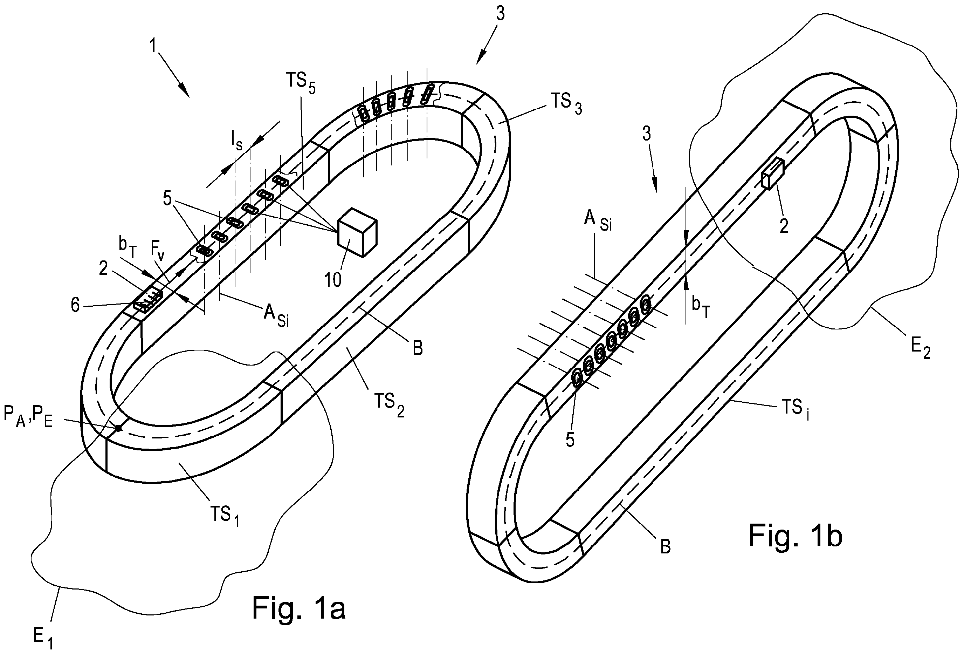

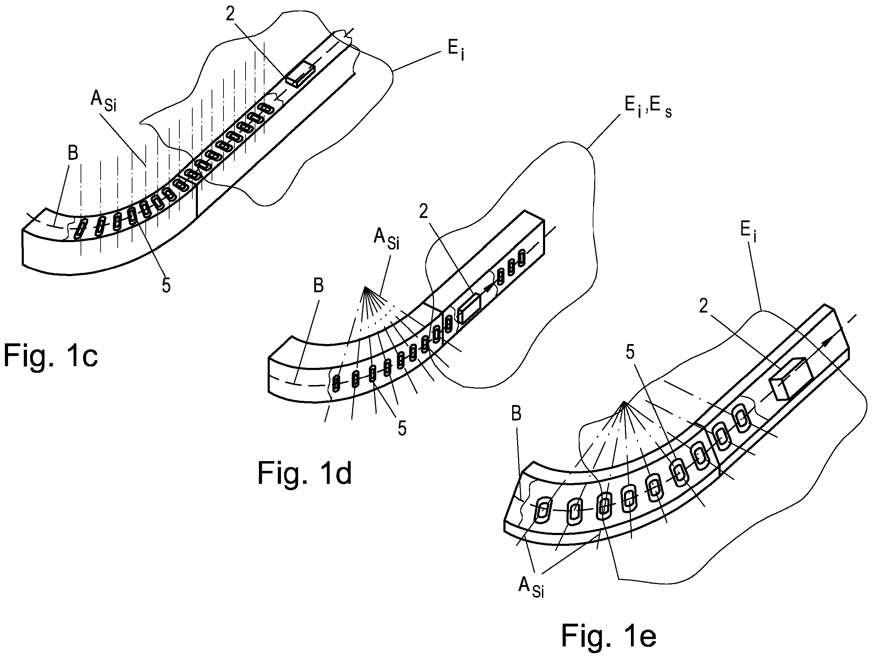

In Fig.1a und 1b ist der grundsätzliche Aufbau einer Transporteinrichtung 1 in Form eines Langstatorlinearmotors dargestellt. Die Transporteinrichtung 1 weist eine oder mehrere Transporteinheiten 2 auf, sowie eine Transportstrecke 3, entlang der die Transporteinheiten 2 bewegbar sind. Die Transportstrecke ist vorzugsweise aus einer Anzahl von Transportsegmenten TSᵢ (i ist hierbei ein Index, der für alle vorhandenen Transportsegmente TS₁, TS₂, TS₃, ... steht) aufgebaut, die in Bewegungsrichtung der Transporteinheit 2 hintereinander angeordnet sind und den Stator des Langstatorlinearmotors bilden und weist einen Anfangspunkt P_{A} und einen Endpunkt P_{E} auf. Im dargestellten Beispiel bildet die Transportstrecke 3 eine geschlossene Schleife aus, wodurch der Anfangspunkt P_{A} und der Endpunkt P_{E} zusammenfallen. Bei einer offen ausgeführten Transportstrecke 3, fallen der Anfangspunkt P_{A} und der Endpunkt P_{E} nicht in einem Punkt zusammen, sondern sind voneinander beabstandet. Die Transportsegmente TSᵢ bilden verschiedene Streckenabschnitte aus, beispielsweise eine Gerade, Kurven mit unterschiedlichen Winkeln und Radien, Weichen, usw. und können sehr flexibel zusammengesetzt werden, um die Transportstrecke 3 der Transporteinrichtung 1 auszubilden, entlang der die Transporteinheiten 2 bewegt werden können. Dieser modulare Aufbau ermöglicht eine sehr flexible Gestaltung der Transporteinrichtung 1. Die Transportsegmente TSᵢ sind dabei natürlich an einer ortsfesten Stützkonstruktion (in Fig.1 nicht dargestellt) angeordnet.

Die Transporteinrichtung 1 ist als Langstatorlinearmotor ausgeführt, bei dem die Transportsegmente TSᵢ in an sich bekannter Weise jeweils einen Teil eines Langstators des Langstatorlinearmotors ausbilden. Entlang der Transportsegmente TSᵢ sind daher in Längsrichtung in bekannter Weise eine Vielzahl von den Stator ausbildenden, ortsfest angeordnete elektrischen Antriebsspulen 5 angeordnet (in Fig.1 aus Gründen der Übersichtlichkeit nur für Transportsegmente TS₄ und TS₅ angedeutet), die mit Antriebsmagneten 6 an den Transporteinheiten 2 (in Fig.1 aus Gründen der Übersichtlichkeit nur für eine Transporteinheit angedeutet) zusammenwirken können, um in bekannter Weise eine Vortriebskraft Fᵥ zum Bewegen der Transporteinheit 2 entlang eines Bewegungspfades B zu erzeugen.

Der Bewegungspfad B ist jene Bahn, entlang der die Transporteinheit 2 an der Transportstrecke bewegt wird. Der Bewegungspfad B ist durch den Aufbau der Transporteinheit 2 und der Transportsegmente TSᵢ vorgegeben, z.B. durch die Größe eines Luftspaltes zwischen den Antriebsmagneten 6 der Transporteinheit 2 und den Antriebsspulen 5 der Transportstrecke 3. Dabei ist der Bewegungspfad B aber keine eindeutige fest definierte Bahn, sondern es hat im Wesentlichen jeder Punkt der Transporteinheit 2 einen eigenen Bewegungspfad B, entlang dem dieser Punkt bei Bewegung der Transporteinheit 2 entlang der Transportstrecke 3 verläuft. Alle diese einzelnen Bewegungspfade B verlaufen jedoch parallel zueinander, weshalb es keine Rolle spielt, auf welchen Bewegungspfad B man sich bezieht. Im Folgenden ist deshalb immer die Rede von einem Bewegungspfad B.

Die Antriebmagnete 6 sind in der Regel als Permanentmagnete ausgeführt und die Ansteuerung der Antriebsspulen 5 erfolgt üblicherweise über eine Steuerungseinheit 10, die z.B. als geeigneter Regler ausgeführt sein kann. Zur Führung der Transporteinheiten 2 entlang des Bewegungspfades B der Transportstrecke 3 sind an den Transportsegmenten TSi in der Regel nicht dargestellte Führungen 11 vorgesehen. Die Führungen 11 sorgen einerseits dafür, dass zwischen den Antriebsmagneten 6 der Transporteinheiten 2 und den Antriebsspulen 5 der Transportsegmente TSᵢ ein im Wesentlichen konstanter Abstand (Luftspalt) eingehalten wird und andererseits dafür, dass die Transporteinheiten 2 sicher an der Transportstrecke 3 gehalten werden. Aufgabe der Führung 11 kann es z.B. sein, Seitenkräfte in Querrichtung, also quer zur Bewegungsrichtung der Transporteinheit, aufzunehmen , Zentrifugalkräfte in Kurven aufzunehmen oder auch Gewichtskräfte infolge der Schwerkraft aufzunehmen, sodass die Transporteinheiten 2 nicht von der Transportstrecke 3 fallen. Es kann aber auch nur eine seitliche Führung 11 in Querrichtung vorgesehen sein und das Haften der Transporteinheit 2 an den Transportsegmenten TSᵢ der Transportstrecke 3 kann durch eine magnetische Haltekraft erfolgen, die durch ein Zusammenwirken der Antriebsmagnete 6 der Transporteinheit 2 mit den Antriebsspulen 5 der Transportsegmente TSᵢ erzeugt wird. Die Führungen 11 können z.B. geeignete Schienen sein, auf denen an der Transporteinheit 2 angeordnete Rollen abrollen. Die konkrete Ausführung der Führung spielt aber für die Erfindung keine Rolle, wichtig ist nur, dass ein sicherer Halt der Transporteinheit 2 auf der Transportstrecke 3 gewährleistet ist.

Die Transporteinrichtung 1 ist so ausgeführt, dass die Transporteinheit 2 in einer Ebene, z.B. in der in Fig.1a dargestellten horizontalen Bewegungsebene E₁ bewegbar ist. Dazu weist die Transportstrecke 3 der Transporteinrichtung 1 zumindest ein gekrümmtes Transportsegment TSᵢ auf, z.B. das Transportsegment TS₃ in Fig.1, dessen vorgegebener Bewegungspfad B die Bewegungsebene E₁ ausbildet. Die Transporteinheit 2 ist auf der gesamten Transportstrecke 3 in genau dieser Ebene E₁ entlang des, von den einzelnen Transportsegmenten TSᵢ vorgegeben Bewegungspfades B bewegbar.

Die Transportstrecke 3 kann aber auch vertikal angeordnet sein, wie in Fig.1b dargestellt ist. Die Transporteinheit 2 ist dann entlang des Bewegungspfades B in der, hier vertikalen, Bewegungsebene E₂ entlang der gesamten Transportstrecke 3 bewegbar. Grundsätzlich kann die Transportstrecke 3 aber auch beliebig im Raum liegen, die Transporteinheit 2 ist jedoch immer in einer Bewegungsebene Eᵢ bewegbar, welche durch den Bewegungspfad B des zumindest einen gekrümmten Transportsegments TSᵢ ausgebildet wird.

Die Antriebsspulen 5 weisen in der Regel einen Querschnitt ähnlich der Form eines Langlochs auf (bzw. ellipsenähnlich). Die Antriebsspulen 5 weisen jeweils eine Spulenachse A_{Si} auf und sind in einem bestimmten Spulenabstand I_{S} voneinander beabstandet in Längsrichtung an den Transportsegmenten TSᵢ angeordnet. Dabei können die Antriebsspulen 5, so wie in Fig.1a-1c dargestellt angeordnet sein, wobei alle Antriebsspulen 5 aller Transportsegmente TSᵢ der gesamten Transportstrecke 3 im Wesentlichen parallele Spulenachsen A_{Si} aufweisen. Unter der Spulenachse A_{Si} ist eine Achse durch den Mittelpunkt des Querschnitts und normal darauf zu verstehen. Bei Querschnitt in Form einer Ellipse bzw. ellipsenähnlichem Querschnitt liegt der Mittelpunkt im Schnittpunkt der Haupt- und Nebenachse der Ellipse, bei Querschnitt in Form eines Langlochs liegt der Mittelpunkt auf einer, die beiden Kreismittelpunkte des Langlochs verbindenden Geraden, zentral zwischen den beiden Mittelpunkten.

Die Antriebsspulen 5 könnten aber auch um neunzig Grad gedreht an den Transportsegmenten TSᵢ angeordnet sein, so wie in Fig.1d dargestellt ist. Die Transporteinheiten 2 würden dann im dargestellten Fall nicht an der Oberseite der Transportstrecke 3 (so wie in Fig.1c), sondern an der Außenseite (oder der Innenseite) der Transportstrecke 3 bewegt werden. An einem gekrümmten Transportsegment TSᵢ würde die Transporteinheit 2 also z.B. entlang der gekrümmten Mantelfläche bewegt werden. Die Spulenachsen A_{Si} liegen bei dieser Ausgestaltung in einer gemeinsamen Spulenebene E_{S}, die im Wesentlichen der Bewegungsebene Eᵢ der Transporteinheit 2 entspricht oder parallel dazu angeordnet ist.

Die Antriebsspulen 5 könnten aber auch in einem anderen Winkel an den Transportsegmenten TSᵢ angeordnet sein, beispielsweise in einem Winkel von 45 Grad, wie in Fig.1e dargestellt ist. Unabhängig von der Anordnung der Antriebsspulen 5 ist die Transporteinheit 2 aber immer in einer Bewegungsebene E₁ entlang der gesamten Transportstrecke 3 bewegbar, die durch den Bewegungspfad B zumindest eines gekrümmten Transportsegments TSᵢ definiert ist. Vom Gedanken der Erfindung sind damit beliebige Anordnungen der Antriebsspulen 5 umfasst, wie beispielhaft anhand der Fig.1c-1d dargestellt ist.

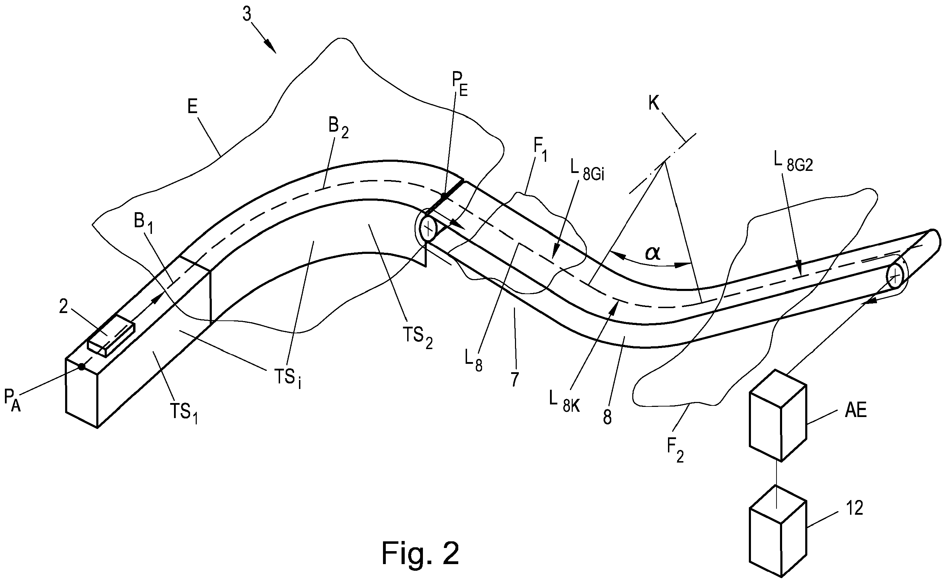

Um die Transporteinheit 2 aber nicht nur in der Bewegungsebene Ei der Transportstrecke 3 bewegen zu können, sondern in verschiedenen Ebenen, ist erfindungsgemäß in Längsrichtung an den Anfangspunkt P_{A} oder Endpunkt P_{E} der Transportstrecke anschließend ein Übergangssegment 7 mit einem Stetigförderer 8 mit einer Längsachse L₈ zum Transport der Transporteinheit 2 in einer, entlang der Längsachse L₈ verlaufenden, Bewegungsrichtung angeordnet, wobei der Stetigförderer 8 vorgesehen ist, die Transporteinheit 2 in Bewegungsrichtung zumindest abschnittsweise in einer von der Bewegungsebene E der Transportstrecke 3 abweichenden Förderebene F zu bewegen, wie nachfolgend anhand Fig.2 im Detail beschrieben wird.

Fig.2 zeigt eine Transportstrecke 3 mit einem geraden Transportsegment TS₁, auf dem der Anfangspunkt P_{A} der Transportstrecke 3 liegt und einem in Längsrichtung daran anschließenden gekrümmten Transportsegment TS₂, auf dem der Endpunkt P_{E} der Transportstrecke 3 liegt. Das gekrümmte Transportsegment TS₂ weist einen Bewegungspfad B₂ auf, der eine Bewegungsebene E ausbildet, in der die Transporteinheit 2 entlang der gesamten Transportstrecke bewegbar ist. Im dargestellten Beispiel ist die Bewegungsebene E also im Wesentlichen horizontal angeordnet, natürlich wäre aber auch eine vertikale Anordnung der Transportstrecke 3 oder eine beliebige Anordnung im Raum denkbar. Ebenso wäre eine alternative Orientierung der Antriebsspulen 5 an den Transportsegmenten TSᵢ der Transportstrecke 3 gemäß den Darstellungen in den Fig.1d und 1e denkbar. In Längsrichtung an den Endpunkt P_{E} der Transportstrecke 3 anschließend ist ein Übergangssegment 7 angeordnet, das einen Stetigförderer 8 aufweist, mit dem die Transporteinheit 2 in Längsrichtung L₈ entlang des Stetigförderers 8 bewegbar ist.

Die konkrete Ausgestaltung des Stetigförderers 8 spielt dabei keine Rolle. Er kann, wie in Fig.2 angedeutet, in Form eines Förderbandes ausgestaltet sein oder als Kettenförderer, Rollenförderer, etc. Der Antrieb des Stetigförderers 8 erfolgt mittels einer geeigneten Antriebseinheit AE und die Steuerung mittels einer geeigneten Steuerungseinheit 12. Die Steuerung könnte aber z.B. auch in der Steuerungseinheit 10 des Langstatorlinearmotors integriert sein. Am Stetigförderer 8 können z.B. auch mehrere Transporteinheiten 2 gleichzeitig befördert werden, im Unterschied zur Transportstrecke 3 können die Transporteinheiten 2 am Stetigförderer 8 aber nicht unabhängig voneinander angesteuert werden, sondern werden mit der durch die Antriebseinheit AE und die Steuerungseinheit 12 vorgegebenen Fördergeschwindigkeit bewegt. Die Fördergeschwindigkeit des Stetigförderers 8 ist vorzugsweise konstant, es wäre aber auch eine Beschleunigung oder Verzögerung des Stetigförderers 8 denkbar.

Die Transporteinheit 2 wird am gekrümmten Transportsegment TS₂ in herkömmlicher Weise, d.h. durch ein Zusammenwirken von Antriebsmagnete 6 der Transporteinheit 2 mit Antriebsspulen 5 des Transportsegments TS₂, bis zum Endpunkt P_{E} der Transportstrecke 3 bewegt. Im Endpunkt P_{E} wird die Transporteinheit an das Übergangssegment 7 übergeben und wird danach in einer Förderebene F am Stetigförderer 8 befördert. Die umlaufende Bewegung des als Förderband ausgeführten Stetigförderers 8 ist in Fig.2 durch die beiden Pfeile dargestellt. Die Längsachse L₈ des Stetigförderers 8 entspricht dabei der Bewegungsrichtung der Transporteinheit 2. Im konkreten Ausführungsbeispiel gemäß Fig.2 weist die Längsachse L₈ des Stetigförderers 8 einen ersten Geradenabschnitt L_{8G1} auf, einen daran anschließenden Kurvenabschnitt L_{8K} und einen daran anschließenden zweiten Geradenabschnitt L_{8G2} auf.

Der erste Geradenabschnitt L_{8G1} verläuft parallel zur Bewegungsebene E der Transportstrecke 3, die Förderebene F₁, in der die Transporteinheit 2 am Stetigförderer im Bereich des ersten Geradenabschnitts L_{8G1} bewegt wird, entspricht also im Wesentlichen der Bewegungsebene E der Transportstrecke 3. Durch den Kurvenabschnitt L_{8K} erfolgt eine Änderung von der Förderebene F₁ hin zu einer, von der Förderebene F₁ und damit auch von der Bewegungsebene E abweichenden Förderebene F₂ im Bereich des zweiten Geradenabschnitts L_{8G2}. Dadurch wird die Transporteinheit 2 im Bereich des zweiten Geradenabschnitts L_{8G2} in einer anderen Ebene bewegt, als auf der Transportstrecke 3. Die Transporteinheit 2 kann entlang des zweiten Geradenabschnitts L_{8G2} in dieser Förderebene F₂ bis zum Ende des Stetigförderers 8 bewegt werden, so wie in Fig.2 dargestellt. Der Kurvenabschnitt L_{8K} weist hier eine Krümmung κ um eine normal zur Längsachse L₈ angeordneten Kurvenachse K auf, es wären aber auch beliebig andere Krümmungsverläufe und eine andere Lage der Kurvenachse K im Raum denkbar. Der Verlauf der Längsachse L₈ des Stetigförderers 8 kann damit sehr flexibel gestaltet werden, z.B. könnte die Längsachse auch eine Kombination aus mehreren Geradenabschnitten L_{8Gi} und mehreren Kurvenabschnitten L_{8K} aufweisen.

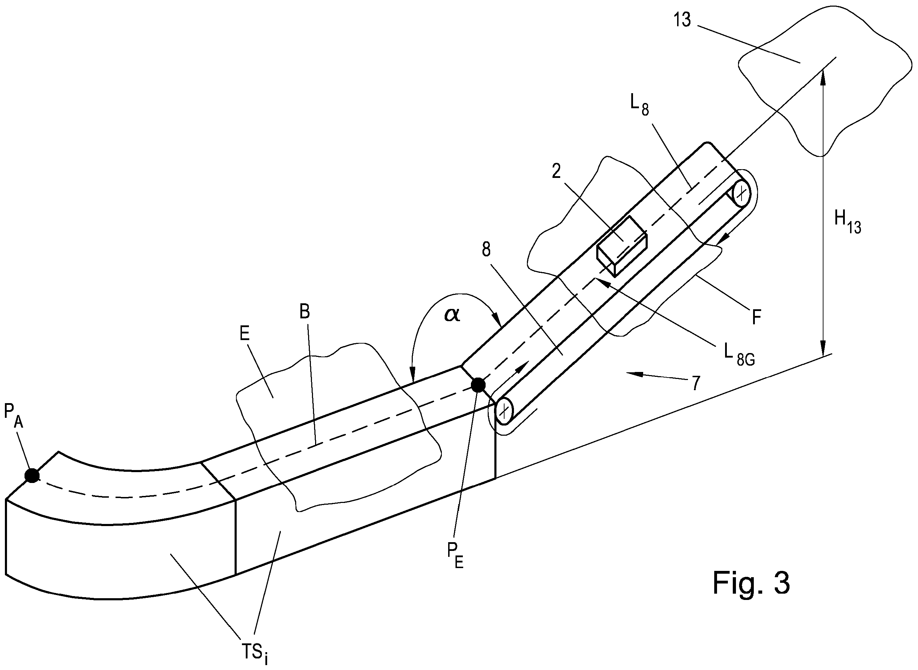

Um eine ruckfreie Bewegung der Transporteinheit 2 im Bereich zwischen dem Transportsegment TSᵢ der Transportstrecke 3, auf dem der Endpunkt P_{E} liegt, und dem Stetigförderer 8 zu gewährleisten, ist ein stetiger Übergang zwischen der Bewegungsebene E und der Förderebene F vorgesehen. Ebenso weist die Längsachse L₈ des Stetigförderers 8 einen kontinuierlichen Krümmungsverlauf in Bewegungsrichtung auf, um eine ruckfreie Bewegung der Transporteinheit 2 entlang des Stetigförderers 8 zu ermöglichen. Im konkreten Ausführungsbeispiel in Fig.2 bedeutet das, dass zwischen den Geradenabschnitten L_{8Gi} und dem Kurvenabschnitt L_{8K} kein Krümmungssprung vorliegt. Dazu kann z.B. zwischen den Geradenabschnitten L_{8Gi} und dem Kurvenabschnitt L_{8K} jeweils ein Übergangsabschnitt angeordnet sein, in dem sich die Krümmungen κ der Geraden (Krümmung κ = unendlich) kontinuierlich der Krümmung κ der Kurve des Kurvenabschnitts L_{8K} annähern. Die Ausgestaltung des Kurvenabschnitts L_{8K} kann dabei beliebig sein, z.B. in Form eines Kreisbogens, eines Splines, etc. Natürlich könnte die Längsachse L₈ auch mehrere Kurvenabschnitte L_{8Ki} aufweisen, die aneinander anschließen oder durch Geradenabschnitte L_{8Gi} verbunden sind. Das Übergangssegment 7 und insbesondere der Stetigförderer 8 können damit sehr flexibel gestaltet werden und an gewünschte Anforderung angepasst werden. Beispielsweise könnte nicht erfindungsgemäß die Längsachse L₈ des Stetigförderers 8 auch nur einen Geradenabschnitt L_{8G} aufweisen, der z.B. in einem bestimmten Winkel α zur Bewegungsebene E der Transportstrecke 3 angeordnet ist, wie in Fig.3 anhand eines, an den Endpunkt P_{E} eines geraden Transportsegments TSᵢ anschließenden Übergangssegments 7 dargestellt ist. Der Stetigförderer 8 ist damit im Wesentlichen in Form einer schiefen Ebene ausgeführt, und die Transporteinheit 2 könnte dann beispielsweise mittels des Stetigförderers 8 in der Förderebene F von der Bewegungsebene E auf eine, parallel dazu und von der Bewegungsebene E in einem Abstand H₁₃ beabstandete höher liegende Ebene 13 befördert werden. Je nach Länge des Übergangssegments 7 und des daran angeordneten Stetigförderers 8 und je nach Größe des Winkels a, kann der Abstand H₁₃ variiert werden und die Ebene 13 könnte z.B. auch unterhalb der Bewegungsebene E liegen, wenn der Winkel α im dargestellten Beispiel größer als 180° wäre. In der Ebene 13 könnte natürlich eine weitere Transportstrecke 3 oder ein weiteres Übergangssegment 7 angeordnet sein, es könnte aber auch ein offenes Ende beispielsweise zur Entnahme der Transporteinheit 2 von der Transporteinrichtung 1 vorgesehen sein.

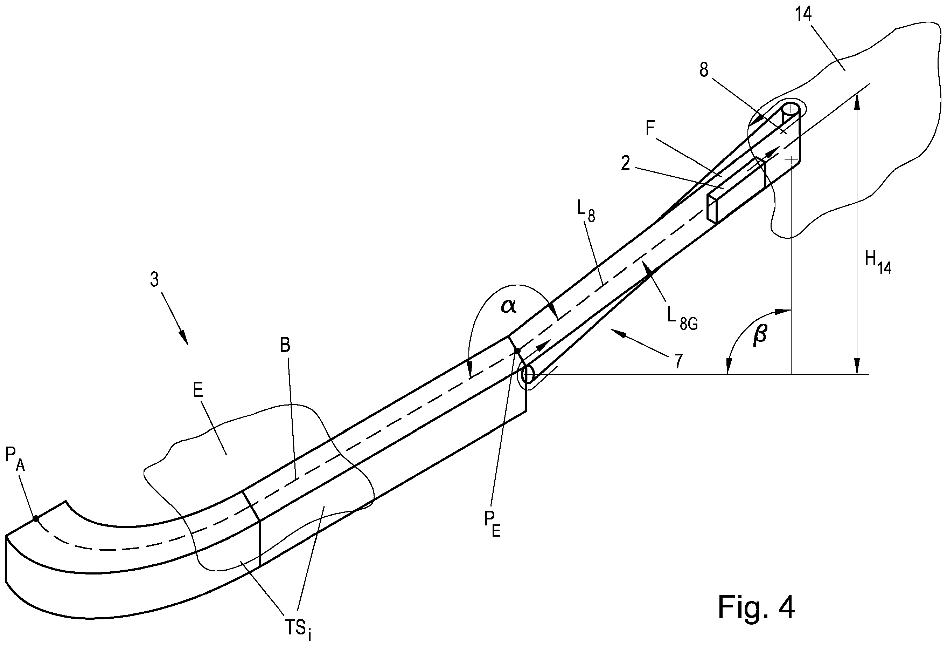

Gemäß einer weiteren bevorzugten Ausführungsform der Erfindung ist die Förderebene F des Stetigförderers 8 in Bewegungsrichtung zumindest abschnittsweise in einem bestimmten Drehwinkel β um die Längsachse L₈ des Stetigförderers 8 verdreht, wie nachfolgend anhand Fig.4 näher beschrieben wird. Der nicht erfindungsgemäßen Stetigförderer 8 des Übergangssegments 7 in Fig.4 schließt im Endpunkt P_{E} an ein gerades Transportsegment TSᵢ der Transportstrecke 3 an. Die Förderebene F des Stetigförderers 8 ist in Bewegungsrichtung der Transporteinheit 2 über die Länge des Stetigförderers 8 linear um die Längsachse L₈ verdreht, sodass die Förderebene F am Ende des Stetigförderers 8 einen Drehwinkel β von neunzig Grad aufweist. Zusätzlich ist die Längsachse L₈ des Stetigförderers 8 in einem Winkel α zur Bewegungsebene E angeordnet.

Die Transporteinheit 2 kann dadurch von der Bewegungsebene E der Transportstrecke 3 über die Förderebene F in eine um neunzig Grad verdrehte Ebene 14 am Ende des Stetigförderers 8 bewegt werden. Aufgrund des Winkels α zwischen der Längsachse L₈ und der Ebene E der Transportstrecke 3 kann die Transporteinheit 2 zudem um einen Abstand H₁₄ in der Höhe nach oben bewegt werden. Der Abstand H₁₄ hängt von der Größe des Winkels α und der Länge des Stetigförderers 8 ab. Wenn der Winkel α im gezeigten Beispiel größer als 180 Grad ist, kann die Transporteinheit 2 relativ zur Ebene E auch nach unten bewegt werden. Der Drehwinkel β kann natürliche beliebig festgelegt werden und ist nicht auf die dargestellten 90° beschränkt.

Die Verdrehung der Förderebene F muss aber nicht linear über die Länge des Stetigförderers 8 erfolgen, es wäre auch ein nichtlinearer Verlauf des Drehwinkels β über die Länge des Stetigförderers 8 denkbar. Bei einem linearen Verlauf des Drehwinkels β erfolgt die Verdrehung der Transporteinheit 2 in Bewegungsrichtung kontinuierlich über die die Länge des Stetigförderers 8, bei gleichbleibender Geschwindigkeit der Transporteinheit 2 bleiben dadurch die, auf die Transporteinheit 2 wirkenden Kräfte, beim Durchfahren des Übergangssegments 7 im Wesentlichen konstant. Bei einem nichtlinearen Verlauf des Drehwinkels β von z.B. 90 Grad über die Länge des Stetigförderers 8 könnte die Änderung des Drehwinkels β beispielsweise über die ersten zwei Drittel der Länge des Übergangssegments 7 45° betragen und über das letzten Drittel der Länge des Übergangssegments 7 die restlichen 45°. Durch die geringere Änderung des Drehwinkels β auf den ersten zwei Drittel des Übergangssegments 7 wird z.B. erreicht, dass bei einer hohen Anfangsgeschwindigkeit der Transporteinheit 2 keine unzulässig hohen Seitenkräfte auf die Transporteinheit 2 wirken. Das letzte Drittel des Übergangssegments 7 mit größerer Änderung des Drehwinkels β könnte beispielsweise mit reduzierter Geschwindigkeit durchfahren werden, ohne dass die Seitenkräfte im Vergleich zu den ersten zwei Drittel des Übergangssegments 7 steigen bzw. unzulässig hohe Seitenkräfte auf die Transporteinheit 2 wirken. Die infolge der Drehung der Transporteinheit 2 auf die Transporteinheit 2 wirkenden Seitenkräfte könnten dadurch z.B. trotz einer Geschwindigkeitsänderung im Wesentlichen über die Länge des Übergangssegments 7 konstant gehalten werden. Dies ist natürlich nur beispielhaft zu verstehen, es wären auch andere nichtlineare Verläufe des Drehwinkels β über die Länge des Übergangssegments 7 möglich. In der Regel wird die Fördergeschwindigkeit des Stetigförderers 8 aber konstant sein und die Transporteinheit 2 mit der gleichbleibenden Fördergeschwindigkeit des Stetigförderers 8 entlang des Fördersegments 7 bewegt. In diesem Fall wird es ausreichend sein, einen linearen Verlauf des Drehwinkels β über die Länge des Übergangssegments 7 vorzusehen.

Je nach Einsatzgebiet der Transporteinrichtung 1 könnte es z.B. auch erforderlich sein, die Transporteinheiten 2 um einen Drehwinkel β kleiner oder größer 90° zu verdrehen, beispielsweise um von den Transporteinheiten 2 transportierte Elemente in unterschiedlich ausgerichteten Arbeitsstationen A zu bearbeiten oder in anderer Weise zu manipulieren. Z.B. wäre es denkbar, einen Stetigförderer 8 mit einem Drehwinkel β = 180° anzuordnen.

Natürlich können die beschriebenen Varianten auch kombiniert werden, z.B. könnte die Längsachse L₈ des in Fig.4 dargestellten um den Drehwinkel β verdrehten Stetigförderers 8 nicht nur einen Geradenabschnitt L_{8G} aufweisen, sondern könnte auch einen oder mehrere Kurvenabschnitte L_{8Ki} und Geradenabschnitte L_{8Gi} aufweisen.

Es ist ersichtlich, dass sich durch die Ausgestaltung des Stetigförderers 8 des Übergangssegments 7 eine Vielzahl an Möglichkeiten gibt, wie das Übergangssegment 7 konfiguriert werden kann.

Vorzugsweise ist am Stetigförderer 8 zumindest eine Halteeinrichtung 15 zum kraftschlüssigen oder formschlüssigen Halten der Transporteinheit 2 am Stetigförderer 8 vorgesehen. Insbesondere wenn die Förderebene F aufgrund des Winkels α eine Steigung (oder ein Gefälle) aufweist oder bei Verdrehungen der Förderebene F aufgrund des Drehwinkels β kann durch eine geeignete Halteeinrichtung 15 verhindert werden, dass die Transporteinheit 2 vom Stetigförderer 8 fällt. Gemäß einer bevorzugten Ausführungsform weist die Halteeinrichtung 15 ferromagnetische Eigenschaften auf und kann dadurch zum Halten der Transporteinheit 2 am Stetigförderer 8 mit den Antriebsmagneten 6 der Transporteinheit 2 zusammenwirken.

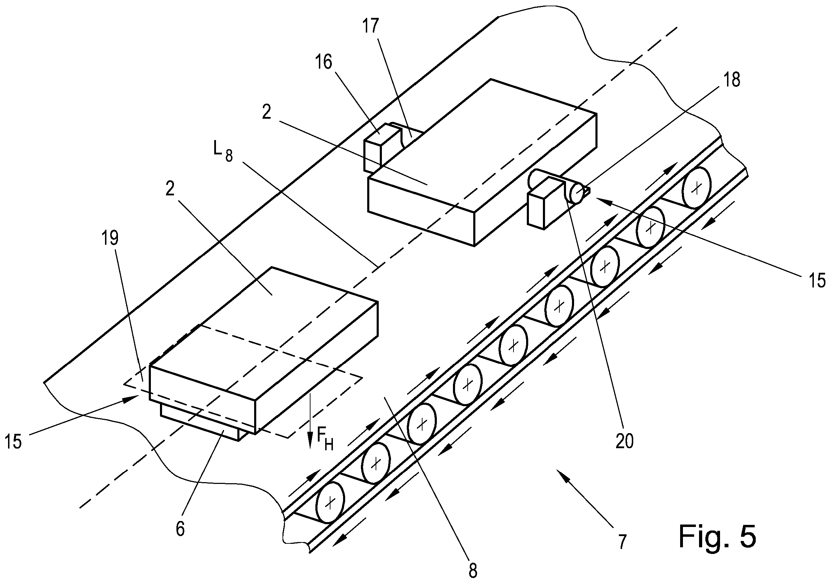

Wenn der Stetigförderer 8 z.B. als Förderband ausgeführt ist, könnte das Förderband aus einem geeigneten ferromagnetischen Material ausgeführt sein. Die Transporteinheit 2 würde dadurch aufgrund der magnetischen Wechselwirkung zwischen dem ferromagnetischen Material und den Antriebsmagneten 6 am Förderband haften. Es wären aber auch andere Ausgestaltungen denkbar, z.B. ein Förderband aus einem geeigneten Kunststoff, in dem ferromagnetische Elemente 19 integriert sind, so wie in Fig.5 angedeutet ist. Durch die magnetische Wechselwirkung zwischen den Antriebsmagneten 6 der Transporteinheit 2 und dem ferromagnetischen Element 19 entsteht eine Haltekraft F_{H}, die die Transporteinheit am Stetigförderer 8 festhält.

In einer alternativen Ausgestaltung weist die Halteeinrichtung 15 des Stetigförderers 8 zumindest ein, vorzugsweise mehrere Aufnahmeeinheiten 16 zum formschlüssigen Halten der Transporteinheit 2 am Stetigförderer 8 auf, wie ebenfalls in Fig.5 dargestellt ist. Die Aufnahmeeinheit 16 wirkt dabei mit einem geeigneten Aufnahmeelement 17 zusammen, das an der Transporteinheit 2 angeordnet ist. Beispielsweise könnten die Aufnahmeeinheiten 16 eine längliche zylindrische Nut 20 aufweisen und das Aufnahmeelement 17 der Transporteinheit 2 weist einen damit korrespondierenden zylindrischen Zapfen 18 auf. Das Aufnahmeelement 17 der Transporteinheit 2 würde von der Aufnahmeeinheit 16 im Endpunkt P_{E} der Transportstrecke 3 formschlüssig aufgenommen werden und bis ans Ende des Stetigförderers 8 transportiert werden. Natürlich ist dies nur beispielhaft, der Fachmann könnte auch andere geeignete Halteeinrichtungen 15 am Stetigförderer 8 vorsehen.

Am Ende des Stetigförderers 8 könnte die Transporteinheit 2 z.B. an eine weitere Transportstrecke 3 einer Transporteinrichtung 1 in Form eines Langstatorlinearmotors übergeben werden oder es könnte der Anfangspunkt P_{A} derselben Transportstrecke 3 an das Übergangssegment 7 anschließen, um eine geschlossene Schleife auszubilden. Es wäre aber auch möglich, dass an das Übergangssegment 7 anschließend ein weiteres Übergangssegment 7 angeordnet wird. Beispielsweise könnten verschiedene standardisierte Übergangssegmente 7 in einer Art Baukasten definiert werden. Je nach Anforderung an eine Transporteinrichtung 1 können aus dem Baukasten bestimmte Übergangsegmente 7 ausgewählt und in Bewegungsrichtung hintereinander angeordnet werden.

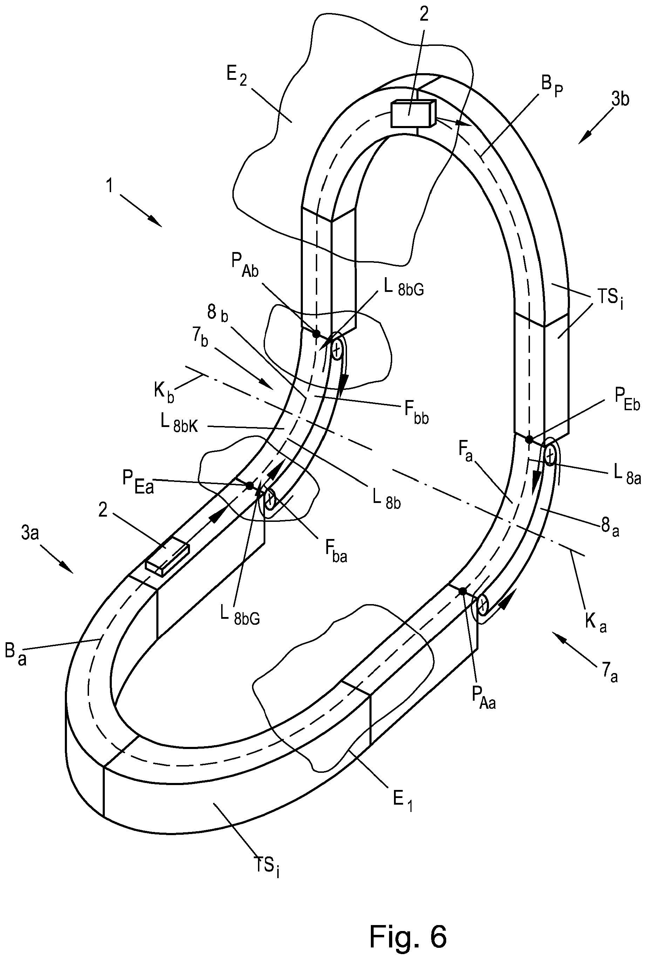

In Fig.6 ist beispielhaft ein Ausführungsbeispiel mit zwei Transportstrecken 3ₐ, 3_{b} in Form von Langstatorlinearmotoren und zwei Übergangssegmenten 7ₐ, 7_{b} zur Verbindung der beiden Transportstrecken 3ₐ, 3_{b} dargestellt. Die Transporteinheit 2 kann in herkömmlicher Weise durch Zusammenwirken der Antriebsmagnete 6 der Transporteinheit 2 mit Antriebsspulen der Transportsegmente TSᵢ entlang eines Bewegungspfads Bₐ in der Bewegungsebene E₁ der ersten Transportstrecke 3ₐ bewegt werden. Am Endpunkt P_{Ea} der ersten Transportstrecke 3ₐ kann die Transporteinheit 2 an das Übergangssegment 7_{b} und den daran angeordneten Stetigförderer 8_{b} übergeben werden. Der Stetigförderer 8_{b} ist hier gekrümmt ausgeführt, weist also eine gekrümmte Längsachse L_{8b} auf. Der Übergang zwischen dem Transportsegment TS₁, auf dem der Endpunkt P_{Ea} der ersten Transportstrecke 3ₐ liegt und dem Stetigförderer 8_{b} ist stetig ausgeführt, sodass eine, im Wesentlichen ruckfreie, Bewegung der Transporteinheit 2 im Übergang gewährleistet werden kann. Ruckfrei bedeutet im Wesentlichen, dass keine Beschleunigungssprünge bei der Bewegung der Transporteinheit 2 auftreten.

Die Längsachse L_{8b} des Stetigförderers 8_{b} weist einen kontinuierlichen Krümmungsverlauf auf, um nicht nur im Übergang zwischen der Transportstrecke 3ₐ und dem Stetigförderer 8_{b}, sondern insbesondere auch während der Bewegung der Transporteinheit 2 am Stetigförderer 8_{b} eine ruckfreie Bewegung zu ermöglichen. Dazu kann die Längsachse L_{8b} des Stetigförderers 8_{b} einen Kurvenabschnitt L_{8K} mit einem geeigneten Kurvenverlauf aufweisen, z.B. in Form eines Splines oder dergleichen. Im konkreten Beispiel weist die Längsachse L_{8b} des Stetigförderers 8_{b} einen zentralen Kurvenabschnitt L_{8bK} in Form eines Kreisbogens mit einer normal zur Längsachse L_{8b} angeordneten Kurvenachse K_{b} auf. An den beiden Enden weist die Längsachse L_{8b} Geradenabschnitte L_{8bG} auf, um einen stetigen Übergang zu den anschließenden geraden Transportsegmenten TSᵢ der beiden Transportstrecken 3ₐ, 3_{b} zu gewährleisten. Um einen kontinuierlichen Krümmungsverlauf über die gesamte Längsachse L_{8b} zu erreichen, sind zwischen den Geradenabschnitten L_{8bG} und dem zentralen Kurvenabschnitt L_{8bK} Verbindungsabschnitte vorgesehen, auf welchen sich die Krümmungen κ der Geradenabschnitte L_{8bG} (Krümmung κ = unendlich) und die Krümmung κ des Kurvenabschnitts L_{8bK} kontinuierlich annähern.

Die Förderebene F_{b}, in der die Transporteinheit 2 am Stetigförderer 8_{b} bewegt wird, ändert sich damit kontinuierlich in Bewegungsrichtung entlang der Längsachse L_{8b}. Am Endpunkt P_{Ea} ist die Förderebene F_{ba} parallel zur ersten Bewegungsebene E₁ der ersten Transportstrecke 3ₐ und am Ende des Stetigförderers 8_{b} ist die Förderebene F_{b} parallel zur zweiten Bewegungsebene E₂ der zweiten Transportstrecke 3_{b}. Die zweite Bewegungsebene E₂ der zweiten Transportstrecke 3_{b} ist hier normal zur ersten Bewegungsebene E₁ der ersten Transportstrecke 3ₐ angeordnet. Mit den erfindungsgemäßen Übergangssegmenten 7ₐ, 7_{b} lässt sich die Transporteinheit 2 damit auf zwei getrennten Transportstrecken 3ₐ, 3_{b} in zwei verschiedenen Bewegungsebenen E₁, E₂ bewegen und kann zwischen den beiden Transportstrecken 3ₐ, 3_{b} übergeben werden. Die beiden Transportstrecken 3ₐ, 3_{b} sind im gezeigten Beispiel im Wesentlichen gleich ausgestaltet, mit jeweils zwei geraden Transportsegmenten TSᵢ und jeweils zwei, um 90 Grad gekrümmte Transportsegmenten TSᵢ.

Die beiden Übergangssegmente 7ₐ, 7_{b} sind ebenfalls gleich ausgestaltet, aber mit entgegengesetzter Förderrichtung der Stetigförderer 8ₐ, 8_{b}, wie durch die Pfeile in Fig. 6 angedeutet. Vorzugsweise sind die Übergangssegmente 7ₐ, 7_{b} so gestaltet, dass beide Bewegungsrichtungen entlang der Längsachse L₈ des jeweiligen Stetigförderers 8ₐ, 8_{b} möglich sind. Es spielt also keine Rolle welches Ende des Übergangssegments 7 an die erste Transportstrecke 3ₐ anschließt und welches Ende an die zweite Transportstrecke 3_{b} anschließt.

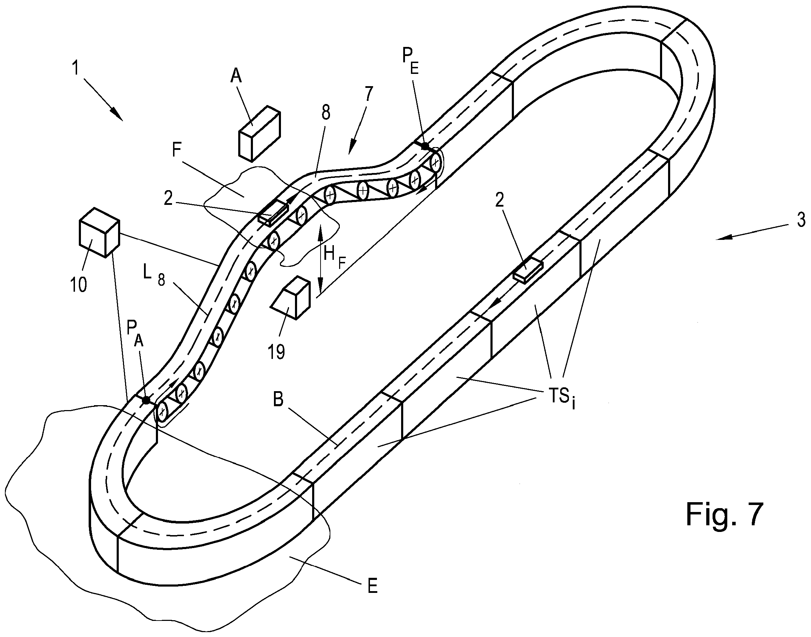

Die Förderrichtung des Stetigförderers 8 kann entsprechend der Bewegungsrichtung der Transporteinheit 2 gesteuert werden, beispielsweise mit der Steuerungseinheit 12 (siehe Fig.2). Die Steuerung der Stetigförderer 8ₐ, 8_{b} könnte im dargestellten Ausführungsbeispiel aber z.B. auch in einer nicht dargestellten zentralen Steuerungseinheit 10 der gesamten Transporteinrichtung 1 erfolgen. Dabei würde die zentrale Steuerungseinheit 10 die beiden Transportstrecken 3ₐ, 3_{b} und die beiden Übergangssegmente 7ₐ, 7_{b} gemeinsam ansteuern. In Fig.7 ist ein weiteres alternatives nicht erfindungsgemäßen Beispiel einer Transporteinrichtung 1 mit einer Transportstrecke 3 und einem Übergangssegment 7 dargestellt. Die Transportstrecke 3 ist aus mehreren geraden und gekrümmten Transportsegmenten TSᵢ aufgebaut und weist einen Anfangspunkt P_{A} und einen Endpunkt P_{E} auf. Zur Ausbildung einer geschlossenen Schleife sind der Anfangspunkt P_{A} und der Endpunkt P_{E} über das Übergangssegment 7 verbunden. Auf der Transportstrecke 3 ist die Transporteinheit 2 in der Bewegungsebene E bewegbar, die durch den Bewegungspfad B zumindest eines gekrümmten Transportsegments TSᵢ vorgegeben ist. Die Längsachse L₈ des am Übergangssegment 7 angeordneten Stetigförderers 8 weist mehrere Geradenabschnitte L_{8G} und mehrere Kurvenabschnitte L_{8K} auf und ist im Wesentlichen so ausgeführt, dass die Transporteinheit 2 von der Bewegungsebene E der Transportstrecke 3 in die, um eine Höhe H_{F} beabstandete Förderebene F bewegbar ist, beispielsweise zur Manipulation eines von der Transporteinheit 2 transportierten Objekts in einer Arbeitsstation A. Das dargestellte Übergangssegment 7 könnte aber beispielsweise auch dazu genutzt werden, ein oder mehrere Hindernisse 19 zu überwinden, die der Bewegungsebene E der Transportstrecke 3 angeordnet sein können.

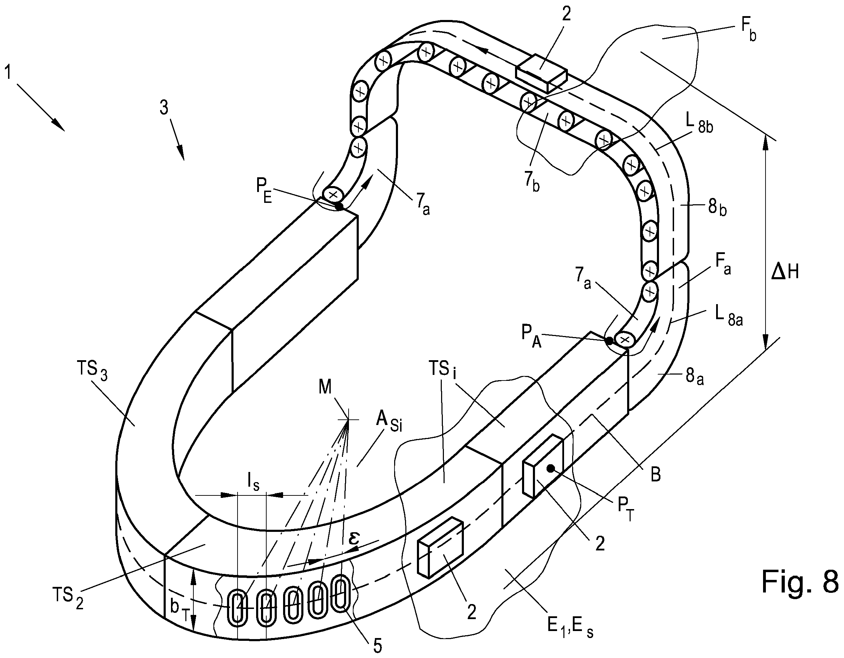

Fig.8 zeigt eine Transportstrecke 3 in einer weiteren nicht erfindungsgemäßen Ausführungsform. Die Anordnung der Antriebsspulen 5 an den Transportsegmenten TSᵢ entspricht der eingangs anhand Fig.1d beschrieben Ausführungsform, sodass die Transporteinheiten 2 im Wesentlichen außen an der Transportstrecke 3 bewegbar sind. Die Spulenachsen A_{Si} der Antriebsspulen 5 der gekrümmten Transportsegmente TSᵢ sind in einem Spulenwinkel ε zueinander angeordnet und schneiden sich vorzugsweise in einem gemeinsamen Punkt M. Im dargestellten Beispiel ist der Punkt M zugleich der Mittelpunkt des Krümmungsradius der gekrümmten Transportsegmente TS₂, TS₃. Die Spulenachsen aller Antriebsspulen 5 aller Transportsegmente TSᵢ der gesamten Transportstrecke 3 liegen in einer gemeinsamen Spulenebene Eₛ. Die Spulenebene Eₛ entspricht im Wesentlichen der Bewegungsebene E₁, welche durch den Bewegungspfad B der gekrümmten Transportsegmente TS₂, TS₃ definiert ist und in der die Transporteinheit 2 entlang der gesamten Transportstrecke 3 bewegbar ist oder ist jedenfalls parallel dazu (das hängt im Wesentlichen davon ab, welchen Punkt P_{T} der Transporteinheit TSᵢ man betrachtet, da jeder Punkt P_{T} einen eigenen Bewegungspfad B beschreibt).

Die Spulenwinkel ε zwischen den einzelnen Antriebsspulen 5 eines gekrümmten Transportsegments TSᵢ müssen aber nicht alle gleich groß sein, so wie im, in Fig. 8, dargestellten Beispiel. Es könnte z.B. ein Transportsegment TSᵢ mit einem über die Länge veränderlichen Krümmungsverlauf ausgestaltet sein. Der Spulenwinkel ε wäre dann nicht am gesamten Transportsegment TSᵢ konstant, sondern im Wesentlichen abhängig von der Krümmung κ. Z.B. könnte ein sogenanntes Kurveneingansgsegment vorgesehen sein, das an einem Ende in Längsrichtung eine vorgegebene Krümmung κ ungleich Null aufweist (κ ≠ 0) und am anderen Ende in Längsrichtung eine unendliche Krümmung κ aufweist (κ = ∞) mit einem vorzugsweise kontinuierlichen Krümmungsverlauf zwischen den beiden Enden.

Die Transportstrecke 3 weist einen Anfangspunkt P_{A} und einen Endpunkt P_{E} auf, die hier jeweils auf einem geraden Transportsegment TSᵢ liegen. An den Anfangspunkt P_{A} und den Endpunkt P_{E} anschließend ist jeweils ein Übergangssegment 7ₐ in Form eines 90 Grad nach oben gekrümmten Bogens angeordnet. Am Übergangssegment 7ₐ ist erfindungsgemäß ein Stetigförderer 8ₐ mit einer Längsachse L₈ₐ angeordnet, der hier in Form eines Förderbandes mit gekrümmter Förderebene Fₐ ausgeführt ist. Die beiden Übergangssegmente 7ₐ sind mittels eines weiteren Übergangssegments 7_{b} verbunden, sodass die Transporteinrichtung 1 eine geschlossene Schleife ausbildet, entlang der die Transporteinheit 2 bewegbar ist. Das Übergangssegment 7_{b} weist natürlich ebenfalls einen Stetigförderer 8_{b} mit einer Längsachse L_{8b} auf. Mittels der dargestellten Anordnung kann die Transporteinheit 2 mittels der Übergangssegmente 7ₐ, 7_{b} von der Bewegungsebene E₁ der Transportstrecke 3 in eine um eine Höhendifferenz ΔH höher liegende Ebene bewegt werden, die hier der Förderebene F_{b} des Stetigförderers 8_{b} des Übergangssegments 7_{b} entspricht. Die Stetigförderer 8ₐ, 8_{b} weisen vorzugsweise eine nicht dargestellte Halteeinrichtung 15 zum kraftschlüssigen oder formschlüssigen Halten der Transporteinheit 2 am jeweiligen Stetigförderer 8ₐ, 8_{b} auf.

Die Ausgestaltung der Transportstrecke 3 gemäß Fig.1 d und Fig.8 hat insbesondere bei den gekrümmten Transportsegmenten TSᵢ gegenüber der Ausgestaltung gemäß Fig.1 c, 1e den Vorteil, dass über die gesamte Breite b_{T} des Transportsegments TSᵢ ein gleichmäßiger Spulenabstand lₛ in Längsrichtung entlang des Bewegungspfades B erreicht wird. Dadurch kann über die gesamte Breite b_{T} und gesamte Länge des gekrümmten Transportsegments TSᵢ ein sehr gleichmäßiges Magnetfeld von den Antriebsspulen 5 erzeugt werden. Dies ist insbesondere dann vorteilhaft, wenn z.B. eine sehr genaue Steuerung der Transporteinheit 2 erforderlich ist, beispielsweise wenn eine Position oder Geschwindigkeit sehr genau eingeregelt werden soll.

Es ist ersichtlich, dass mit der erfindungsgemäßen Transporteinrichtung 1 eine hohe Flexibilität in der räumlichen Gestaltung erreicht wird, was insbesondere bei begrenzten Platzverhältnissen in der Bewegungsebene E vorteilhaft ist.

Die Erfindung ist natürlich nicht auf die gezeigten Beispiele beschränkt, es können beliebig konfigurierte Transportstrecken 3 mit beliebig ausgestalteten Übergangssegmenten 7 kombiniert werden, um die Transporteinheit(en) 2 in mehreren verschiedenen Ebenen bewegen zu können.

Auch wenn die Erfindung nur anhand einer einseitigen Transportstrecke 3 beschrieben wurde, ist vom Erfindungsgedanken auch eine beidseitige Transportstrecke 3 umfasst. Dabei sind in Bewegungsrichtung gesehen beidseitig an der Transporteinheit 2 Antriebsmagnete 6 vorgesehen, die mit beidseitig der Transporteinheit 2 angeordneten Antriebsspulen 5 von Transportsegmenten TSᵢ zusammenwirken. Die Übergangssegmente 7 könnten dann ebenfalls beidseitig ausgeführt sein, mit beidseitig der Transporteinheit 2 angeordneten Stetigförderern 8. Eine Transportstrecke 3 kann aber auch einseitige und beidseitige Streckenabschnitte aufweisen. Durch eine beidseitige Ausführung können z.B. Übergabestellen oder Weichen realisiert werden, an denen die Transporteinheit 2 von einem einseitigen Streckenabschnitt auf einen nachfolgenden in Querrichtung gegenüberliegenden einseitigen Streckenabschnitt übergeben werden kann. Solche Übergabestellen sind z.B. aus der AT 517219 B1 bekannt. Eine beidseitige Transportstrecke 3 kann aber beispielsweise auch für den Transport schwerer Lasten auf Steigungen vorteilhaft sein, weil durch das beidseitige Zusammenwirken von Antriebsmagneten 6 und Antriebsspulen 5 eine höhere Vortriebskraft auf die Transporteinheit 2 ausgeübt werden kann.

## Patentansprüche

1. Transporteinrichtung (1) mit zumindest einer Transporteinheit (2), an der Antriebsmagnete (6) angeordnet sind, und einer, aus einer Vielzahl von, in Längsrichtung hintereinander angeordneten, Transportsegmenten (TSi) aufgebauten, Transportstrecke (3) mit einem Anfangspunkt (P_{A}) und einem Endpunkt (P_{E}), entlang der die Transporteinheit (2) in Längsrichtung entlang eines, von den Transportsegmenten (TSi) vorgegebenen, Bewegungspfades (B) bewegbar ist, wobei an den Transportsegmenten (TSi) jeweils ortsfeste elektrische Antriebsspulen (5) angeordnet sind, die mit den Antriebsmagneten (6) der Transporteinheit (2) zusammenwirken, um einen Langstatorlinearmotor auszubilden und um eine Vortriebskraft zum Bewegen der Transporteinheit (2) entlang des Bewegungspfades (B) zu erzeugen, wobei die Transportstrecke (3) zumindest ein gekrümmtes Transportsegment (TSi) mit einem, in einer zweidimensionalen Ebene liegenden gekrümmten Bewegungspfad (B) aufweist, wobei die zweidimensionale Ebene eine Bewegungsebene (E) definiert, in der die Transporteinheit (2) entlang der gesamten Transportstrecke (3) bewegbar ist, wobei in Längsrichtung an den Anfangspunkt (P_{A}) oder Endpunkt (P_{E}) der Transportstrecke (3) anschließend ein Übergangssegment (7) mit einem Stetigförderer (8) mit einer Längsachse (Ls) zum Transport der Transporteinheit (2) in einer, entlang der Längsachse (Ls) verlaufenden, Bewegungsrichtung angeordnet ist, wobei der Stetigförderer (8) vorgesehen ist, die Transporteinheit (2) in Bewegungsrichtung zumindest abschnittsweise in einer von der Bewegungsebene (E) der Transportstrecke (3) abweichenden Förderebene (F) zu bewegen, **dadurch gekennzeichnet, dass** zur ruckfreien Bewegung der Transporteinheit (2) im Übergang zwischen der Transportstrecke (3) und dem Übergangssegment (7), ein stetiger Übergang zwischen der Bewegungsebene (E) der Transportstrecke (3) und der Förderebene (F) des Stetigförderers (8) vorgesehen ist, wobei die Längsachse (L8b) des Stetigförderers (8b) einen kontinuierlichen Krümmungsverlauf aufweist und an beiden Enden jeweils einen Geradenabschnitt (L8bG) aufweist und wobei das an das Übergangssegment (7) anschließende Transportsegment (TSi) als gerades Transportsegment (TSi) ausgebildet ist.

2. Transporteinrichtung (1) nach Anspruch 1, **dadurch gekennzeichnet, dass** die Förderebene (F) in Richtung der Längsachse (Ls) des Stetigförderers (8) zumindest abschnittsweise parallel zur Bewegungsebene (E) ist.

3. Transporteinrichtung (1) nach Anspruch 1 oder 2, **dadurch gekennzeichnet, dass** die Förderebene (F) in Bewegungsrichtung zumindest abschnittsweise in einem bestimmten Drehwinkel (ß) um die Längsachse (Ls) des Stetigförderers (8) verdreht ist.

4. Transporteinrichtung (1) nach einem der Ansprüche 1 bis 3, **dadurch gekennzeichnet, dass** an das Übergangssegment (7) in Bewegungsrichtung anschließend zumindest ein weiteres Übergangssegment (7) mit einem Stetigförderer (8) vorgesehen ist.

5. Transporteinrichtung (1) nach einem der Ansprüche 1 bis 3, **dadurch gekennzeichnet, dass** an das Übergangssegment (7) in Bewegungsrichtung anschließend der Anfangspunkt (P_{A}) oder der Endpunkt (P_{E}) der Transportstrecke (3) oder ein Anfangspunkt (P_{A}) oder Endpunkt (P_{E}) einer weiteren Transportstrecke (3) vorgesehen ist.

6. Transporteinrichtung (1) nach einem der Ansprüche 1 bis 5, **dadurch gekennzeichnet, dass** der Stetigförderer (8) zumindest eine Halteeinrichtung (15) zum kraftschlüssigen oder formschlüssigen Halten der Transporteinheit (2) am Stetigförderer (8) aufweist.

7. Transporteinrichtung (1) nach Anspruch 6, **dadurch gekennzeichnet, dass** die Halteeinrichtung (15) ferromagnetische Eigenschaften aufweist und zum kraftschlüssigen Halten der Transporteinheit (2) mit Antriebsmagneten (6) der Transporteinheit (2) zusammenwirkt.

8. Transporteinrichtung (1) nach Anspruch 6, **dadurch gekennzeichnet, dass** die Halteeinrichtung (15) zumindest ein Aufnahmeeinheit (16) aufweist, das zum formschlüssigen Halten der Transporteinheit (2) am Stetigförderer (8) mit zumindest einem, an der Transporteinheit angeordneten, korrespondierenden Aufnahmeelement (17) zusammenwirkt.

9. Transporteinrichtung (1) nach einem der Ansprüche 1 bis 8, **dadurch gekennzeichnet, dass** die Antriebsspulen (5) an den Transportsegmenten (TSi) in Längsrichtung voneinander beabstandete angeordnet sind und jeweils eine Spulenachse (A_{Si}) aufweisen, wobei die Spulenachsen (A_{Si}) aller Antriebsspulen (5) aller Transportsegmente (TSi) der Transportstrecke (3) in einer gemeinsamen zweidimensionalen Spulenebene (Es) liegen, wobei die Spulenebene (Es) der Bewegungsebene (E) der Transportstrecke (3) entspricht oder parallel dazu angeordnet ist.

## Claims

1. A transport device (1) comprising at least one transport unit (2), on which drive magnets (6) are arranged, and a transport track (3) composed of a plurality of transport segments (TSi) arranged consecutively in the longitudinal direction, having a starting point (P_{A}) and an ending point (P_{E}), along which the transport unit (2) can be moved in the longitudinal direction along a movement path (B) predefined by the transport segments (TSᵢ), wherein stationary electric drive coils (5) are arranged on each of the transport segments (TSi), which interact with the drive magnets (6) of the transport unit (2) to form a long stator linear motor and to generate a propulsive force for moving the transport unit (2) along the movement path (B), the transport track (3) comprising at least one curved transport segment (TSi) having a curved movement path (B) that is located in a two-dimensional plane, the two-dimensional plane defining a movement plane (E) in which the transport unit (2) can be moved along the entire transport track (3), wherein a transition segment (7) including a continuous-flow conveyor (8) having a longitudinal axis (Ls) is provided, adjoining the starting point (P_{A}) or the ending point (P_{E}) of the transport track (3) in the longitudinal direction, for transporting the transport unit (2) in a direction of movement extending along the longitudinal axis (Ls), the continuous-flow conveyor (8) being provided to move the transport unit (2) in the direction of movement at least sectionally in a conveying plane (F) deviating from the movement plane (E) of the transport track (3), **characterized in that** a steady transition between the movement plane (E) of the transport track (3) and the conveying plane (F) of the continuous-flow conveyor (8) is provided for a movement of the transport unit (2) without jerk in the transition between the transport track (3) and the transition segment (7), wherein the longitudinal axis (L₈) of the continuous-flow conveyor (8) has a continuous course of curvature and a straight section (L8bG) on both ends respectively and wherein the transport segment (TSi) adjoining the transition segment (7) is formed as a straight transport segment (TSi).

2. The transport device (1) according to claim 1, **characterized in that** the conveying plane (F) in the direction of the longitudinal axis (Ls) of the continuous-flow conveyor (8) is parallel to the movement plane (E) at least sectionally.

3. The transport device (1) according to claim 1 or 2, **characterized in that** the conveying plane (F) is rotated in the direction of movement at least sectionally by a certain rotational angle (β) about the longitudinal axis (Ls) of the continuous-flow conveyor (8).

4. The transport device (1) according to any one of claims 1 to 3, **characterized in that** at least one further transition segment (7) including a continuous-flow conveyor (8) is provided adjoining the transition segment (7) in the direction of movement.

5. The transport device (1) according to any one of claims 1 to 3, **characterized in that** the starting point (P_{A}) or the ending point (P_{E}) of the transport track (3), or a starting point (P_{A}) or an ending point (P_{E}) of a further transport track (3), is provided, adjoining the transition segment (7) in the direction of movement.

6. The transport device (1) according to any one of claims 1 to 5, **characterized in that** the continuous-flow conveyor (8) comprises at least one holding device (15) for holding the transport unit (2) on the continuous-flow conveyor (8) in a force-fit or form-locked manner.

7. The transport device (1) according to claim 6, **characterized in that** the holding device (15) has ferromagnetic properties and cooperates with drive magnets (6) of the transport unit (2) so as to hold the transport unit (2) in a force-fit manner.

8. The transport device (1) according to claim 6, **characterized in that** the holding device (15) comprises at least one receiving unit (16), which cooperates with at least one corresponding receiving element (17) arranged on the transport unit so as to hold the transport unit (2) on the continuous-flow conveyor (8) in a form-locked manner.

9. The transport device (1) according to any one of claims 1 to 8, **characterized in that** drive coils (5) that are arranged at a distance from one another in the longitudinal direction, each having a coil axis (A_{Si}), are arranged on the transport segments (TSᵢ), the coil axes (A_{Si}) of all drive coils (5) of all transport segments (TSi) of the transport track (3) being located in a shared two-dimensional coil plane (Es), the coil plane (Es) corresponding to the movement plane (E) of the transport track (3) or being arranged parallel thereto.

## Revendications

1. Dispositif de transport (1) comportant au moins une unité de transport (2) sur laquelle des aimants d'entraînement (6) sont disposés et une voie de transport (3) composée d'une pluralité de segments de transport (TSi) disposés les uns derrière les autres dans la direction longitudinale, comportant un point de départ (P_{A}) et un point d'arrivée (P_{E}), le long desquels l'unité de transport (2) peut être déplacée dans la direction longitudinale le long d'un trajet de déplacement (B) spécifié par les segments de transport (TSᵢ), dans lequel des bobines d'entraînement (5) électriques fixes sont respectivement disposées sur les segments de transport (TSᵢ), lesqueles interagissent avec les aimants d'entraînement (6) de l'unité de transport (2) afin de former un moteur linéaire à stator long et de générer une force de propulsion permettant de déplacer l'unité de transport (2) le long du trajet de déplacement (B), dans lequel la voie de transport (3) comporte au moins un segment de transport (TSᵢ) incurvé comportant un trajet de déplacement (B) incurvé situé dans un plan bidimensionnel, dans lequel le plan bidimensionnel définisse un plan de déplacement (E) dans lequel l'unité de transport (2) peut être déplacée le long de toute la voie de transport (3), dans lequel, dans la direction longitudinale au niveau du point de départ (P_{A}) ou du point d'arrivée (P_{E}) de la voie de transport (3), un segment de transition (7), comportant un convoyeur continu (8) comportant un axe longitudinal (L₈) pour le transport de l'unité de transport (2) dans une direction de déplacement s'étendant le long de l'axe longitudinal (L₈), est ensuite disposé, dans lequel le convoyeur continu (8) est conçu pour déplacer l'unité de transport (2) dans la direction de déplacement, au moins par sections, dans un plan de convoyage (F) s'écartant du plan de déplacement (E) de la voie de transport (3), **caractérisé en ce que,** pour un déplacement régulier de l'unité de transport (2) dans la transition entre la voie de transport (3) et le segment de transition (7), une transition continue entre le plan de déplacement (E) de la voie de transport (3) et le plan de convoyage (F) du convoyeur continu (8) est fournie, dans lequel l'axe longitudinal (L8b) du convoyeur continu (8b) présente un parcours de courbure continu et comporte respectivement une section rectiligne (L8bG) aux deux extrémités et dans lequel le segment de transport (TSi) attenant au segment de transition (7) est conçu sous la forme d'un segment de transport (TSi) rectiligne.

2. Dispositif de transport (1) selon la revendication 1, **caractérisé en ce que** le plan de convoyage (F) est parallèle, au moins par sections, dans la direction de l'axe longitudinal (L₈) du convoyeur continu (8), au plan de déplacement (E).

3. Dispositif de transport (1) selon la revendication 1 ou 2, **caractérisé en ce que** le plan de convoyage (F) est tourné, dans la direction de déplacement, au moins par sections, à un angle de rotation (β) déterminé, autour de l'axe longitudinal (L₈) du convoyeur continu (8).

4. Dispositif de transport (1) selon l'une quelconque des revendications 1 à 3, **caractérisé en ce que,** au niveau du segment de transition (7) dans la direction de déplacement, au moins un autre segment de transition (7) comportant un convoyeur continu (8) est ensuite fourni.

5. Dispositif de transport (1) selon l'une quelconque des revendications 1 à 3, **caractérisé en ce que,** au niveau du segment de transition (7) dans la direction de déplacement, le point de départ (P_{A}) ou le point d'arrivée (P_{E}) de la voie de transport (3) ou un point de départ (P_{A}) ou un point d'arrivée (P_{E}) d'une autre voie de transport (3) est ensuite fourni.

6. Dispositif de transport (1) selon l'une quelconque des revendications 1 à 5, **caractérisé en ce que** le convoyeur continu (8) comporte au moins un dispositif de maintien (15) permettant de maintenir l'unité de transport (2) par complémentarité de force ou de forme sur le convoyeur continu (8).

7. Dispositif de transport (1) selon la revendication 6, **caractérisé en ce que** le dispositif de maintien (15) présente des propriétés ferromagnétiques et coopère avec des aimants d'entraînement (6) de l'unité de transport (2) pour maintenir l'unité de transport (2) par complémentarité de force.

8. Dispositif de transport (1) selon la revendication 6, **caractérisé en ce que** le dispositif de maintien (15) comporte au moins une unité de réception (16), laquelle, pour maintenir l'unité de transport (2) par complémentarité de forme sur le convoyeur continu (8), coopère avec au moins un élément de réception (17) correspondant disposé sur l'unité de transport.

9. Dispositif de transport (1) selon l'une quelconque des revendications 1 à 8, **caractérisé en ce que** les bobines d'entraînement (5) sont disposées à distance les unes des autres sur les segments de transport (TSᵢ) dans la direction longitudinale et comportent respectivement un axe de bobine (Asᵢ), dans lequel les axes de bobine (Asᵢ) de toutes les bobines d'entraînement (5) de tous les segments de transport (TSi) de la voie de transport (3) se trouvent dans un plan de bobine (Eₛ) bidimensionnel commun, dans lequel le plan de bobine (Es) correspond au plan de déplacement (E) de la voie de transport (3) ou est disposé parallèlement à celui-ci.
